# EUROPÄISCHE PATENTSCHRIFT

(11) **EP 3 208 781 B1**
(45) Veröffentlichungstag und Bekanntmachung des Hinweises auf die Patenterteilung: **26.08.2020**
(21) Anmeldenummer: 16156673.2
(22) Anmeldetag: 22.02.2016
(51) Int. Cl.: G07F 7/06

(54) **LEERGUT-RÜCKNAHME-VORRICHTUNG**
EMPTIES RETURN DEVICE
DISPOSITIF DE REPRISE DE CONSIGNES

(43) Veröffentlichungstag der Anmeldung: 23.08.2017
(60) Teilanmeldung: 20183685.5
(73) Patentinhaber: Wincor Nixdorf International GmbH, 33106 Paderborn (DE)
(72) Erfinder: HARTUNG, Domenic, 99192 Molsdorf (DE)

(56) Entgegenhaltungen:
- EP-A1- 2 290 624
- EP-A1- 2 363 837
- EP-A1- 2 538 392
- EP-A1- 2 538 393
- EP-A1- 2 684 618
- EP-A1- 2 689 922
- EP-A2- 2 378 494
- WO-A1-98/02853
- DE-A1- 10 207 405
- DE-A1-102010 040 177
- DE-U1-202014 002 768
- US-A1- 2012 068 584
- US-A1- 2012 173 014

## Beschreibung

Das Dokument EP-A-2290624 offenbart eine Vorrichtung zum Sammeln von Rückgabegebinden mit einem Steg. Das Dokument DE-A-10207405 offenbart eine Vorrichtung zum Annehmen von Leergutartikeln mit einer optischen Erfassungsvorrichtung. Die Ansprüche 1, 9 offenbaren die Erfindung. Die Ansprüche 2-8, 10-14 offenbaren bevorzugte Ausführungsbeispiele. Die Erfindung betrifft eine Leergut-Rücknahme-Vorrichtung.

Durch die Erfindung wird eine Leergut-Rücknahme-Vorrichtung geschaffen, mit welcher eine Leerguteinführung in die Vorrichtung fehlerfreier erfolgen kann.

Die Erfindung stellt eine Leergut-Rücknahme-Vorrichtung bereit, mit
- einem Vorrichtungsgehäuse, welches eine Gehäusewand aufweist,
- einer Leergut-Einführöffnung, welche in der Gehäusewand ausgebildet ist und über welche Leergut in die Leergut-Rücknahme-Vorrichtung entlang einer Einführrichtung einführbar ist,
- einer Fördertechnik, welche im Vorrichtungsgehäuse angeordnet ist und von welcher Leergut, das über die Leergut-Einführöffnung eingeführt wurde, weggefördert werden kann, wobei die Fördertechnik einen Leergut-Aufnahmeabschnitt aufweist, welcher der Leergut-Einführöffnung zugewandt ist und über welchen das Leergut von der Leergut-Einführöffnung aus auf die Fördertechnik gelangt, wobei der Leergut-Aufnahmeabschnitt benachbart zu sowie in der Einführrichtung in einem Abstand von der Leergut-Einführöffnung angeordnet ist, sodass zwischen der Leergut-Einführöffnung und dem Leergut-Aufnahmeabschnitt ein durch den Abstand definierter Spalt vorliegt,
- einer optische Erfassungsvorrichtung, welche im Vorrichtungsgehäuse benachbart zur sowie zumindest teilweise um die Leergut-Einführöffnung herum angeordnet ist, um über die Leergut-Einführöffnung eingeführtes Leergut zumindest im Wesentlichen rundherum optisch erfassen zu können, und
- einem Steg, welcher sich in der Einführrichtung in einem Bereich zwischen einem unteren Abschnitt der Leergut-Einführöffnung und dem Leergut-Aufnahmeabschnitt der Fördertechnik erstreckt, um dadurch als eine den Spalt in die Einführrichtung zumindest teilweise überbrückende Auflage für das Leergut dienen zu können.

Ein Leergut kann beispielsweise eine Flasche, beispielsweise eine Pfandflasche, beispielsweise eine Einweg-Flasche oder eine Mehrwegflasche sein oder eine Dose, beispielsweise aus Plastik oder Metall.

Auf dem Leergut ist oder sind in einigen Ausführungsformen ein oder mehrere optische Charakteristika zum Identifizieren eines Typs eines jeweiligen Leerguts aufgebracht, beispielsweise in Form eines eindimensionalen oder mehrdimensionalen Barcodes oder QR-Codes, oder in Form eines Logos oder einer anderen optischen Repräsentation eines Typs eines jeweiligen Leerguts. Dieses eine optische Charakteristikum oder diese mehreren optischen Charakteristika werden mittels der optischen Erfassungsvorrichtung erfasst und von einem Prozessor, beispielsweise einem Computer (beispielsweise unter Verwendung einer (beispielsweise zentralen) Datenbank, in der eine Vielzahl von vordefinierten optischen Charakteristika gespeichert ist, die jeweils einem oder mehreren Typen eines Leerguts zugeordnet sind), wird der zu dem oder den erfassten optischen Charakteristika zugehörige Typ des Leerguts ermittelt.

Indem der Steg den Spalt von unten her zumindest teilweise überbrückt, kann z.B. verhindert werden, dass sich Leergut in dem Spalt verfängt, wodurch andernfalls ein Vorrichtungs-Fehler via Verblockung von Leergut im Einführbereich auftreten könnte. Ferner erlaubt es der Steg, der als solcher, z.B. per se, relativ zur Öffnung z.B. schmaler ausgebildet ist, dass die optische Erfassungsvorrichtung das auf dem Steg befindliche Leergut auch von unten her, z.B. seitlich an dem Steg vorbei optisch erfassen kann, wodurch z.B. Leergut-Erfassungs-Fehler vermieden werden können, z.B. die Häufigkeit von Leergut-Erfassungs-Fehlern verringert werden kann.

Der Steg erstreckt sich funktionsgemäß zumindest im Wesentlichen auf einem/dem Höhenniveau des unteren Abschnitts der Leergut-Aufnahmeöffnung, um dadurch als die genannte, überbrückende Auflage dienen zu können, ohne den Förderweg des Leerguts von der Leergut-Einführöffnung zu der Fördertechnik und/oder zu dem Leergut-Aufnahmeabschnitt der Fördertechnik (derart) zu behindern, sodass eine Stau- und/oder Wegblockierungsgefahr gegeben wäre.

Die Leergut-Rücknahme-Vorrichtung kann z.B. mit einer Manschette bereitgestellt sein, die sich entlang eines Innenumfangs der Leergut-Einführöffnung erstreckt, wobei sich der Steg von einem unteren Abschnitt der Manschette aus in die Leergut-Einführrichtung integral erstreckt, z.B. frei auskragend erstreckt. D.h., der Steg ist damit integral, d.h. z.B. stofflich einstückig, mit der Manschette (an deren unterem Abschnitt) ausgebildet. Die Manschette erstreckt sich z.B. um einen Innenumfang der Leergut-Einführöffnung zumindest im Wesentlichen geschlossen herum.

Der Steg kann z.B. mit der Gehäusewand fest verbunden sein und sich von dem unteren Abschnitt der Leergut-Einführöffnung aus in Richtung zu dem Leergut-Aufnahmeabschnitt hin erstrecken, z.B. frei auskragend erstrecken. Diese vorgenannte Ausführungsform kann z.B. anhand der vorstehend erläuterten Manschetten-Struktur erfolgen, kann jedoch auch auf andere Weise erzielt werden, indem z.B. der Steg an einem der Gehäusewand zugewandten Endabschnitt einen z.B. nur nach unten hin gerichteten Flansch aufweist, mittels dessen der Steg an der Gehäusewand befestigt ist. Hierbei kann der Steg (zusammen mit seinem Flansch) in der Seitenansicht (quer zur Leergut-Einführrichtung) eine abgewinkelte, z.B. zumindest im Wesentlichen rechtwinklige, Gestalt haben.

Der Steg kann z.B. zumindest teilweise eine in Einführrichtung langgestreckte Gestalt haben, mit einer Breite (in der Draufsicht der Vorrichtung quer zu einer durch die Leergut-Einführöffnung mittig verlaufenden Durchgangsachse), die maximal so groß ist wie die Hälfte oder ein Viertel (oder maximal so groß 1/6 oder 1/8) eines (des) mittleren Durchmessers und/oder eines (des) Umkreisdurchmessers der Leergut-Einführöffnung. Der Steg ist z.B. als ein Zentralsteg ausgebildet, welcher sich in der Draufsicht zentral in und entlang einer durch die Mitte der Leergut-Einführöffnung erstreckenden Durchgangsachse erstreckt, wobei sich der Steg und/oder der Zentralsteg jedoch auf einem/dem Höhenniveau des unteren Abschnitts der Leergut-Einführöffnung erstreckt.

Der Steg kann z.B. eine Lippe aufweisen oder von einer Lippe gebildet sein, die sich entlang der Einführrichtung von der Einführ-Öffnung aus bis zu einem dem Leergut-Aufnahmeabschnitt hin zugewandten, freien Endabschnitt hin verjüngt, welcher (Endabschnitt) quer zu Einführrichtung eine Breite hat (in der Draufsicht der Vorrichtung quer zu einer durch die Leergut-Einführöffnung mittig verlaufenden Durchgangsachse), die maximal so groß ist wie die Hälfte oder ein Viertel (oder maximal so groß 1/6 oder 1/8) eines (des) mittleren Durchmessers und/oder eines (des) Umkreisdurchmessers der Leergut-Einführöffnung.

Die Lippe verjüngt sich z.B. beidseitig (in der Draufsicht der Vorrichtung beidseitig einer durch die Leergut-Einführöffnung mittig verlaufenden Durchgangsachse) degressiv (in die Leergut-Einführrichtung), sodass die Lippe in Breitenrichtung sich einander gegenüberliegende konkave Seitenränder aufweist. Diese Ausführungsform kann z.B. bei relativ breiter und damit sicherer Auflage auf dem Steg dennoch ein ausreichendes Sichtfeld (seitlich) von unten her gewährleisten, sodass auf dem Steg befindliches Leergut über/durch die konkaven Seitenränder (d.h. an diesen vorbei) von der optischen Erfassungsvorrichtung optisch erfasst werden kann.

Der Steg kann z.B. eine Doppel-Lippe mit einer ersten und einer zweiten Lippe aufweisen, welche sich jeweils in die Einführrichtung von der Leergut-Einführöffnung aus bis zu einem freien Endabschnitt hin erstrecken, z.B. frei auskragend erstrecken, und welche z.B. jeweils eine in Einführrichtung langgestreckte, Gestalt haben, und wobei die erste und die zweite Lippe quer zur Einführrichtung in einem Lippen-Querabstand voneinander angeordnet sind, sodass sich auf dem Steg befindliches Leergut von der optischen Erfassungsvorrichtung auch durch eine von dem Lippen-Querabstand definierte Lippen-Zwischenlücke zwischen der ersten und der zweiten Lippe hindurch optisch erfassbar ist.

Der Steg kann z.B. einen ersten Satz und einen zweiten Satz von in Finnen-Abständen zueinander benachbart angeordneten Finnen mit einer jeweiligen Finnenfläche aufweist, welche Finnen sich mit ihrer Finnenfläche jeweils zumindest Wesentlichen parallel zur Einführrichtung sowie zumindest im Wesentlichen radial zur Leergut-Einführöffnung erstrecken, sodass sich auf dem Steg befindliches Leergut von der optischen Erfassungsvorrichtung auch durch von den (genannten) Finnen-Abständen (, welche quer zu den Finnenflächen vorliegen,) definierte Finnen-Zwischenlücken zwischen den Finnen hindurch optisch erfassbar ist.

Der erste Satz von Finnen und der zweite Satz von Finnen können z.B. auf einander gegenüberliegenden Seiten (in der Draufsicht der Vorrichtung quer zu einer durch die Leergut-Einführöffnung mittig verlaufenden Durchgangsachse) des Stegs langgestreckter Gestalt angeordnet sind, welcher Steg damit z.B. einen zentralen Steg darstellt/bildet, der in der Draufsicht der Vorrichtung in und entlang der der durch die Leergut-Einführöffnung mittig verlaufenden Durchgangsachse verläuft. Die seitlich des (zentralen) Stegs langgestreckter Gestalt ausgebildeten Finnen können z.B. die Auflage des Leerguts verbessern, wobei aufgrund der Finnen-Zwischenlücken (d.h. der Lücken zwischen den (benachbarten) Finnen) trotzdem ausreichend Sichtfeld vorliegt, über welches das optische Erfassungssystem auf dem Steg und/oder den Finnen vorliegendes/befindliches Leerung optisch erfassen kann.

Der Steg kann z.B. ein transparentes Material aufweisen oder aus einem transparenten Material ausgebildet ist, sodass die optische Erfassungsvorrichtung auf dem Steg befindliches Leergut durch den Steg hindurch optisch erfassen kann.

Durch die Erfindung wird auch eine Leergut-Rücknahme-Vorrichtung bereitgestellt, mit
- einem Vorrichtungsgehäuse, welches eine Gehäusewand aufweist,
- einer Leergut-Einführöffnung, welche in der Gehäusewand ausgebildet ist und über welche Leergut in die Leergut-Rücknahme-Vorrichtung entlang einer Einführrichtung einführbar ist,
- einer Fördertechnik, welche im Vorrichtungsgehäuse angeordnet ist und von welcher Leergut, das über die Leergut-Einführöffnung eingeführt wurde, weggefördert werden kann, wobei die Fördertechnik einen Leergut-Aufnahmeabschnitt aufweist, welcher der Leergut-Einführöffnung zugewandt ist und über welchen das Leergut von der Leergut-Einführöffnung aus auf die Fördertechnik gelangt, wobei der Leergut-Aufnahmeabschnitt benachbart zu sowie in der Einführrichtung in einem Abstand von der Leergut-Einführöffnung angeordnet ist, sodass zwischen der Leergut-Einführöffnung und dem Leergut-Aufnahmeabschnitt ein durch den Abstand definierter Spalt vorliegt,
- einer optische Erfassungsvorrichtung, welche im Vorrichtungsgehäuse benachbart zur sowie zumindest teilweise um die Leergut-Einführöffnung herum angeordnet ist, um über die Leergut-Einführöffnung eingeführtes Leergut zumindest im Wesentlichen rundherum optisch erfassen zu können, und
- einer Manschette, die sich um den Innenumfang der Leergut-Einführöffnung zumindest im Wesentlichen geschlossen herum erstreckt und welche sich in der Einführrichtung von der Leergut-Einführöffnung aus in Richtung zu dem Leergut-Aufnahmeabschnitt der Fördertechnik erstreckt, wodurch die Manschette mit einem unteren Abschnitt von ihr als eine den Spalt in die Einführrichtung zumindest teilweise überbrückende Auflage für das Leergut dient, und wobei die Manschette zumindest in ihrem unteren Abschnitt ein transparentes Material aufweist oder aus einem transparenten Material gebildet ist, sodass die optische Erfassungsvorrichtung auf dem unteren Abschnitt der Manschette befindliches Leergut durch diesen unteren Abschnitt der Manschette hindurch optisch erfassen kann.

Die Fördertechnik kann z.B. ein erstes und ein zweites sich in Einführrichtung langgestrecktes Förderband mit einer korrespondierend langgestreckten Förderbandfläche aufweisen, wobei die Förderbänder bezüglich einer sich in der Einführrichtung erstreckenden, zwischen den Förderbändern verlaufenden Längsachse, welche in der Draufsicht der Vorrichtung durch die Mitte der Leergut-Einführöffnung verläuft, zumindest im Wesentlichen symmetrisch angeordnet sind, und wobei z.B. der Steg, insofern vorhanden, ebenfalls bezüglich dieser Längsachse zumindest im Wesentlichen symmetrisch ausgebildet ist.

Das optische Erfassungssystem kann z.B. eine oder mehrere Kameras und/oder einen oder mehrere Barcodescanner und/oder noch andere optische Sensoren aufweisen.

Die Gehäusewand kann z.B. von einer schwenkbaren Gerätetür der Leergut-Rücknahme-Vorrichtung gebildet sein, wobei das optische Erfassungssystem und der Steg an der Innenseite der Gerätetür angebracht sind, sodass das optische Erfassungssystem und der Steg beim schwenkenden Öffnen der Gerätetür mitgeschwenkt werden und damit zugänglich gemacht werden können. Die Fördertechnik ihrerseits ist z.B. Vorrichtungsgehäuse fest im Innern des Gehäuses installiert, z.B. in einem von de Gerätetür separaten, stationären Gehäusekörper, (und damit z.B. nicht mit der Gerätetür mitschwenkbar vorgesehen).

Die Erfindung wird nachfolgend mit Bezug auf die Zeichnung anhand von bestimmten Ausführungsbeispielen erläutert. Die Erfindung soll aber nicht auf diese Ausführungsbeispiele eingeschränkt sein, sondern auch irgendwelche anderen Ausführungsformen, Modifikationen und Abwandlungen umfassen, insofern diese vom durch die angehängten Ansprüche definierten Schutzumfang umfasst sind.

In der Zeichnung zeigen:
Figur 1 eine perspektivische Ansicht einer Leergut-Rücknahme-Vorrichtung gemäß einer ersten Ausführungsform bei geöffneter (Front-)Gerätetür,
Figur 2 eine perspektivische Ansicht einer Leergut-Einführöffnung der Leergut-Rücknahme-Vorrichtung von Figur 1 schräg von vorne,
Figur 3 eine Ansicht von unten auf die geöffnete (Front-)Gerätetür der Leergut-Rücknahme-Vorrichtung von Figuren 1 und 2,
Figur 4 eine schematische Ansicht von unten eines Teilaspekts einer Leergut-Rücknahme-Vorrichtung gemäß einer zweiten Ausführungsform der Erfindung,
Figur 5 eine schematische Ansicht schräg von vorne unten her eines Teilaspekts einer Leergut-Rücknahme-Vorrichtung gemäß einer dritten Ausführungsform der Erfindung, und
Figur 6 eine Detailansicht schräg von vorne unter her des Teilaspekts der Leergut-Rücknahme-Vorrichtung von Figur 5.

In der Beschreibung und Zeichnung werden über sämtliche Figuren hinweg für die gleichen Teile die gleichen Bezugszeichen verwendet.

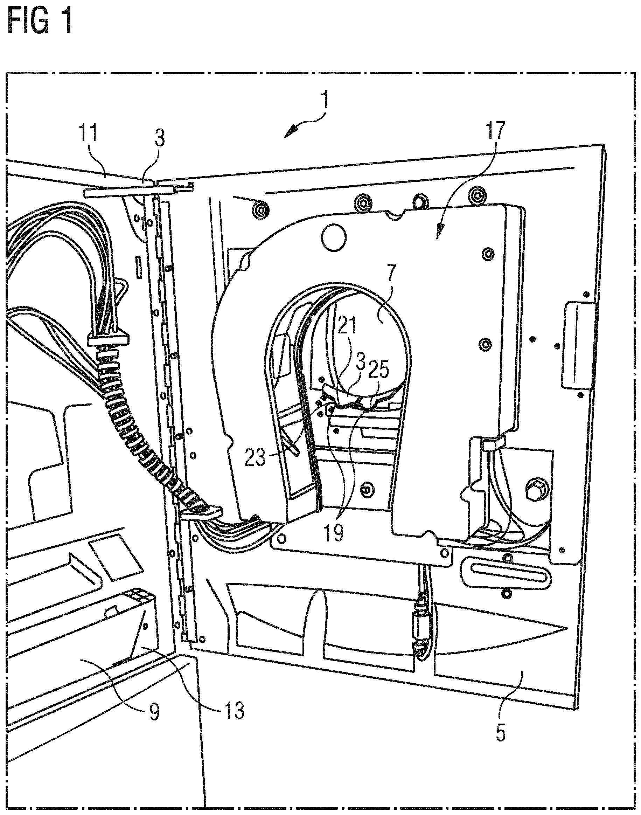

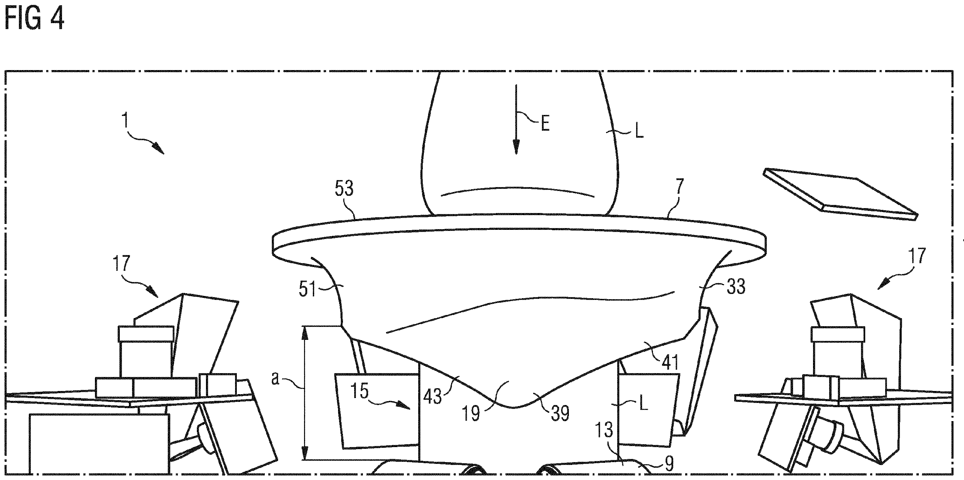

Mit Bezug auf die Figuren 1 bis 3 weist eine Leergut-Rücknahme-Vorrichtung 1 gemäß einer ersten Ausführungsform der Erfindung auf ein Vorrichtungsgehäuse 3, welches eine Gehäusewand 5 aufweist, die hier in Form einer schwenkbaren (Front-)Gerätetür ausgebildet ist, eine Leergut-Einführöffnung 7, welche in der Gehäusewand 5 ausgebildet ist und über welche Leergut L (siehe z.B. Figur 4) in die Leergut-Rücknahme-Vorrichtung 1 entlang einer Einführrichtung (Pfeil) E einführbar ist, die z.B. zumindest im Wesentlichen senkrecht zur Öffnungsfläche verläuft, eine Fördertechnik 9, welche im Vorrichtungsgehäuse 9 angeordnet ist, z.B. (stationär) in einem von der Gehäusewand 5 separaten Gehäusekörper 11 des Vorrichtungsgehäuses 9 angeordnet ist, und von welcher (das) Leergut L (siehe z.B. Figur 4), das über die Leergut-Einführöffnung 7 eingeführt wurde, (von der Leergut-Einführöffnung 7) weggefördert werden kann, wobei die Fördertechnik 9 einen Leergut-Aufnahmeabschnitt 13 aufweist, welcher der Leergut-Einführöffnung 7 zugewandt ist und über welchen das Leergut von der Leergut-Einführöffnung 7 aus auf die Fördertechnik 9 gelangt, wobei der Leergut-Aufnahmeabschnitt 13 benachbart zu sowie in der Einführrichtung (Pfeil) E in einem Abstand a (siehe z.B. Figur 4) von der Leergut-Einführöffnung 7 angeordnet ist, sodass zwischen der Leergut-Einführöffnung 7 und dem Leergut-Aufnahmeabschnitt 13 ein durch den Abstand a definierter Spalt 15 (siehe z.B. Figur 4) vorliegt, eine optische Erfassungsvorrichtung 17, welche im Vorrichtungsgehäuse 3 benachbart zur sowie zumindest teilweise um die Leergut-Einführöffnung 7 herum angeordnet ist, um über die Leergut-Einführöffnung 7 eingeführtes Leergut zumindest im Wesentlichen rundherum (d.h. zumindest im Wesentlichen um 360°) (bezüglich einer zentralen Durchgangsachse der Leergut-Einführöffnung 7) optisch erfassen zu können, und einen Steg 19, welcher sich in der Einführrichtung (Pfeil) E in einem Bereich zwischen einem unteren Abschnitt 21 der Leergut-Einführöffnung 7 und dem Leergut-Aufnahmeabschnitt 13 der Fördertechnik 9 erstreckt, um dadurch als eine den Spalt 15 in die Einführrichtung (Pfeil) E zumindest teilweise überbrückende Auflage für das Leergut L dienen zu können.

Mittels des Stegs 19 kann das Risiko verringert werden, dass Leergut L unbeabsichtigt in den Spalt 15 gelangt, wodurch es andernfalls zu einer Blockierung der Einführung von Leergut L in die Leergut-Rücknahme-Vorrichtung 1 kommen könnte.

Bei der in den Figuren 1 bis 3 dargestellten ersten Ausführungsform ist der Steg 19 als ein Doppelsteg, z.B. in Form einer Doppel-Lippe, mit einer ersten und einer zweiten Lippe 23, 25, ausgebildet, welche erste und zweite Lippe 23, 25 jeweils eine in Einführrichtung E langgestreckte Gestalt haben und sich jeweils entlang der Einführrichtung E von der Leergut-Einführöffnung 7 aus bis zu einem freien Endabschnitt 27, 29 erstrecken, und wobei sich die erste und die zweite Lippe 23, 25 quer zur Einführrichtung E in einem Lippen-Querabstand q voneinander angeordnet sind, sodass sich auf dem Steg 19 befindliches Leergut L von der optischen Erfassungsvorrichtung 17 auch durch eine von dem Lippen-Querabstand q definierte Lippen-Zwischenlücke 31 zwischen der ersten und der zweiten Lippe 23, 25 hindurch optisch erfassbar ist. Hierdurch kann z.B. das Risiko eines Lesefehlers verringert werden.

Die beiden Lippen 23, 25 sind in der Draufsicht der Leergut-Aufnahmevorrichtung 1 bezüglich einer zentralen Durchgangsachse DA durch die Leergut-Einführöffnung 7 zumindest im Wesentlichen symmetrisch.

Bei der in den Figuren 1 bis 3 dargestellten ersten Ausführungsform weist die Leergut-Rücknahme-Vorrichtung 1 eine Manschette 33 auf, die sich um den Innenumfang der Leergut-Einführöffnung 7 erstreckt und die in einem unteren Abschnitt in die Einführrichtung E durch einen Manschetten-Ansatz 35 verlängert ist, der im Querschnitt (quer zur Einführrichtung E) einen zumindest im Wesentlichen U- und/oder Wannen- und/oder Halbkreisform-Querschnitt hat und von welchem ausgehend der Steg 19 mit seinen beiden Lippen 23, 25 integral, z.B. stofflich einstückig, ausgebildet ist. Damit sind der Steg 19 und/oder die erste und die zweite Lippe 23, 25 korrespondierend integral, z.B. stofflich einstückig, mit der Manschette 15 ausgebildet/verbunden. Der Steg 19 und/oder die erste und die zweite Lippe 23, 25 und/oder die Manschette 33 sind z.B. aus einem Kunststoffmaterial hergestellt.

Die optische Erfassungsvorrichtung 17 weist z.B. eine Mehrzahl von optischen Sensoren 37 auf, mittels welcher optischen Sensoren 37 unterschiedliche Erkennungsmerkmale des Leerguts L an unterschiedlichen Umfangspositionen erfassbar sind.

Die in der Figur 4 schematisch gezeigte zweite Ausführungsform einer Leergut-Rücknahme-Vorrichtung 1 kann z.B. im Wesentlichen wie die in Figuren 1-3 gezeigte Ausführungsform ausgebildet sein, wobei nachfolgend vor allem mögliche Unterschiede bei der zweiten Ausführungsform von Figur 4 erläutert werden und ansonsten auf die vorausgehende Beschreibung zu Figuren 1-3 verwiesen wird.

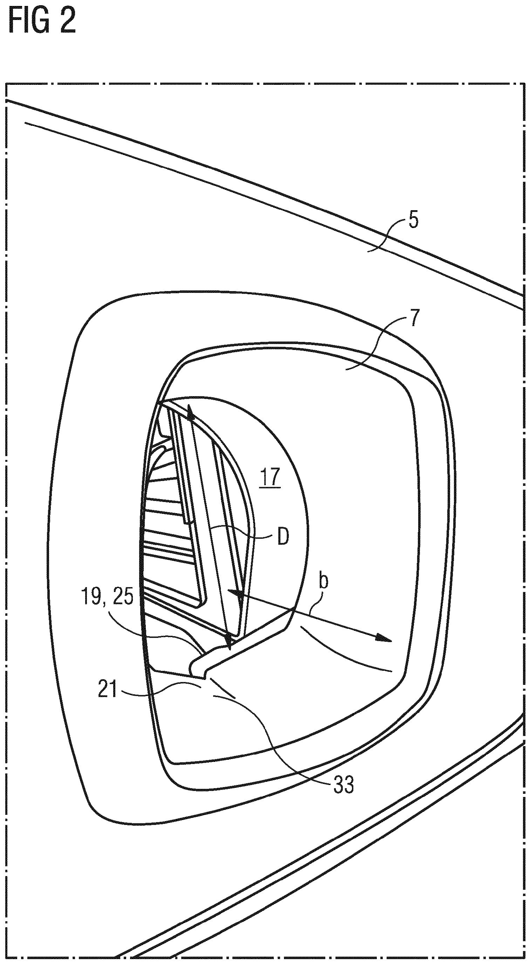

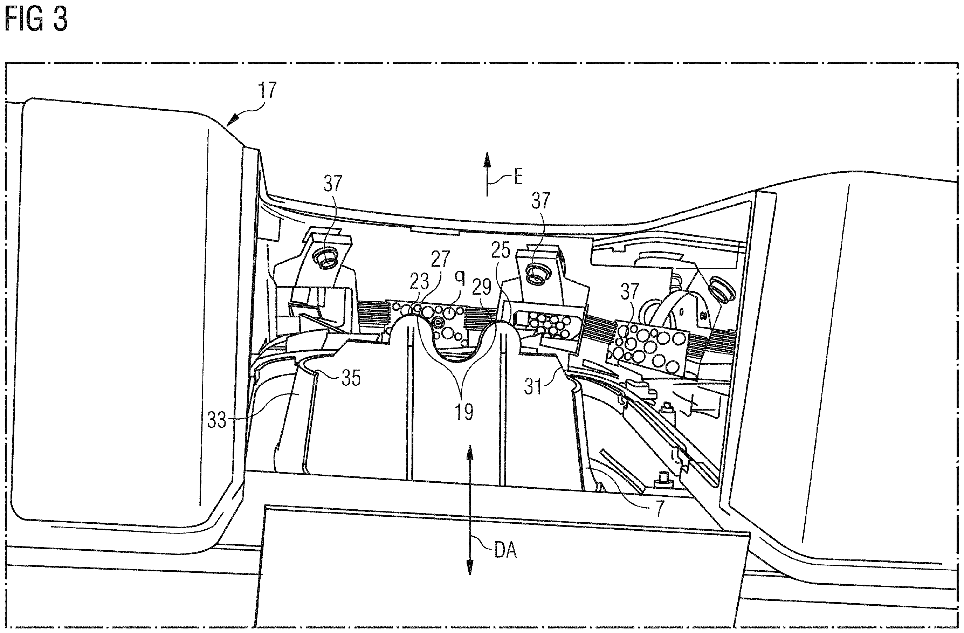

Bei der zweiten Ausführungsform ist der den Spalt 15 zwischen der Leergut-Einführöffnung und dem Leergut-Aufnahmeabschnitt 13 der Fördertechnik 9 ausgebildete teilweise überbrückende Steg 19 als ein Einzelsteg, z.B. als eine Lippe, ausgebildet, der/die sich ausgehend von der Leergut-Einführöffnung 7 in die Einführrichtung E (d.h. zu dem Leergut-Aufnahmeabschnitt 13 hin) bis zu einem dem Leergut-Aufnahmeabschnitt 13 hin zugewandten, freien Endabschnitt 39 hin verjüngt (und zwar in seiner Breite (in der Draufsicht gesehen quer zur Einführrichtung E, d.h., z.B., in der Draufsicht der Vorrichtung quer zu einer durch die Leergut-Einführöffnung 7 mittig verlaufenden Durchgangsachse DA (siehe Figur 3))), und zwar hier degressiv verjüngt, welcher freie Endabschnitt 39 quer zur Einführrichtung E (in der Draufsicht gesehen) eine Breite b hat, die maximal so groß ist wie die Hälfte oder ein Viertel eines mittleren Durchmessers D und/oder eines Umkreisdurchmessers (siehe Figur 2) der Leergut-Einführöffnung 7.

Die Leergut-Rücknahme-Vorrichtung 1 gemäß der zweiten Ausführungsform weist z.B. eine Manschette 33 auf, die sich um die Leergut-Einführöffnung 7 herum erstreckt und welche z.B. einen sich die Leergut-Einführöffnung 7 umgebenden Zylinderrohrabschnitt 51 und einen integral, z.B. stofflich einstückig, an dem Zylinderrrohrabschnitt 53 angeformten Flanschabschnitt 53 aufweist, der in der Einführrichtung E gesehen stromaufwärts des Zylinderrohrabschnitts 51 an diesem angebracht ist. Der Steg 19, d.h. in diesem Falle z.B. der Einzelsteg und/oder die (Einzel-)Lippe, ist integral, d.h. z.B. stofflich einstückig, an dem Zylinderrohrabschnitt 51 der Manschette 33 angeformt, und zwar an einem unteren Abschnitt davon.

Bei der zweiten Ausführungsform ist die Lippe (und damit der von der Lippe gebildete Steg 19) beidseitig (in der Draufsicht gesehen quer zur Einführrichtung E) degressiv verjüngt, sodass die Lippe in Breitenrichtung sich einander gegenüberliegende konkave Seitenränder 41, 43 aufweist.

Die optische Erfassungsvorrichtung 17 kann durch die von den konkaven Seitenrändern 41, 43 definierten seitlichen Aussparungen von schräg unter her die Unterseite eines sich auf/über dem Steg 19 befindlichen Leergut erfassen, wodurch das Risiko eines Lesefehlers verringert werden kann.

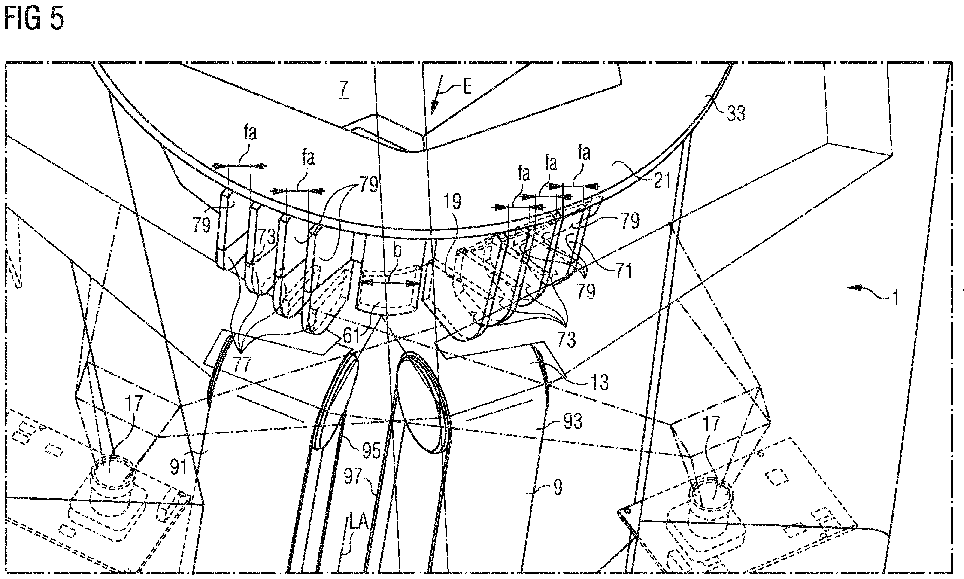

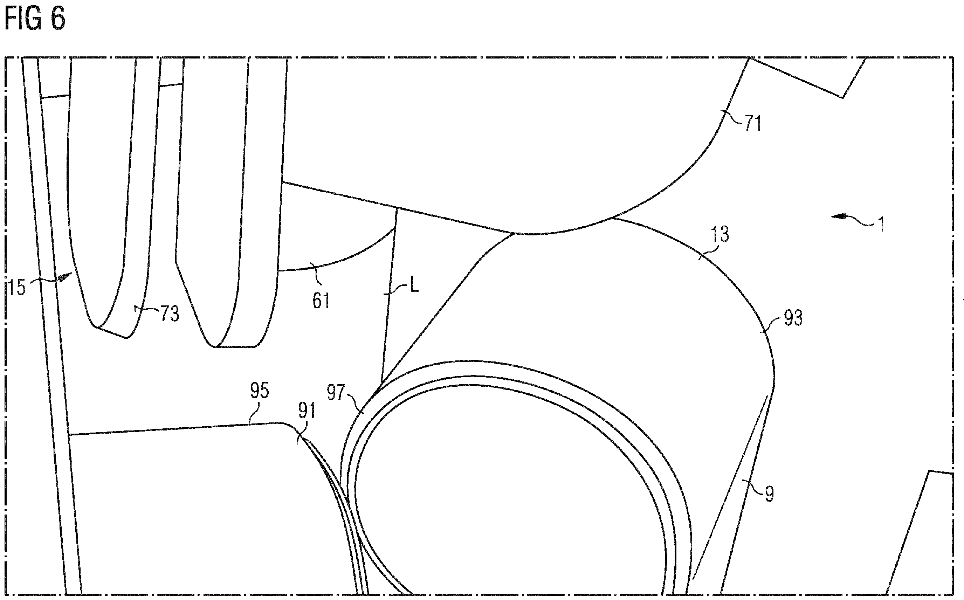

Die Figuren 5 und 6 zeigen Ansichten einer dritten Ausführungsform einer Leergut-Rücknahme-Vorrichtung 1 in einer Ansicht schräg von vorne unten und in einer Detailansicht auf den Spalt 15. Die Leergut-Rücknahme-Vorrichtung 1 von Figuren 5 und 6 kann zumindest im Wesentlichen wie die Leergut-Rücknahme-Vorrichtung 1 gemäß der ersten und/oder der zweiten Ausführungsform ausgebildet sein, sodass nachfolgend vor allem die Unterschiede zu den vorhergehenden beiden Ausführungsformen erläutert werden und ansonsten hinsichtlich einer möglichen Ausgestaltung auf die Beschreibung der vorausgehenden Ausführungsformen verwiesen wird.

Bei der dritten Ausführungsform gemäß Figuren 5 und 6 weist die Leergut-Rücknahme-Vorrichtung 1 eine sich um die Leergut-Einführöffnung 7 herum erstreckende Manschette 33 auf, wobei sich der Steg 19 von einem unteren Abschnitt 21 der Leergut-Einführöffnung 7 aus in die Einführrichtung E erstreckt. Der untere Abschnitt 21 der Leergut-Einführöffnung 7 wird in diesem Falle von einem unteren Abschnitt der Manschette 33 gebildet, an/von welchem/welcher der Steg 19 ausgebildet ist, z.B. integral/stofflich einstückig ausgebildet ist, und sich z.B. in die Einführichtung E frei auskragend in Richtung zu dem Leergut-Aufnahmeabschnitt 13 der Fördertechnik 9 erstreckt.

Der Steg 19 weist bei der dritten Ausführungsform einen Steg langgestreckter Gestalt, z.B. einen Zentralsteg, 61 auf, welcher sich in der Draufsicht gesehen (vgl. Figur 3), in und entlang der zentralen Durchgangsachse DA erstreckt, die zentral durch die Leergut-Einführöffnung 7 verläuft. Dieser Steg langgestreckter Gestalt 61 erstreckt sich vom unteren Abschnitt 21 der Leergut-Einführöffnung 7 und/oder dem unteren Abschnitt 21 der Manschette 33 aus frei auskragend in die Leergut-Einführrichtung E in Richtung zu der Fördertechnik 9 und/oder zu deren Leergut-Aufnahmeabschnitt 13. Die Breite b des Stegs langgestreckter Gestalt 61 ist z.B. kleiner als ein Viertel oder kleiner als ein Achtel des mittleren Durchmessers D (vgl. Figur 2) oder des Umkreisdurchmessers der Leergut-Einführöffnung 7.

Beidseitig des Stegs langgestreckter Gestalt 61, d.h. in der Draufsicht gesehen beidseitig einer Längsachse des Stegs langgestreckter Gestalt und/oder in der Draufsicht gesehen beidseitig der Durchgangsachse DA, ist jeweils ein Satz Finnen 71, 73, d.h. z.B. ein erster Satz Finnen 71 und ein zweiter Satz Finnen 73, angeordnet, welche als solche jeweils eine Finnenfläche 75, 77 definieren. Die Finnen 71, 73 des ersten und zweiten Satzes Finnen 71, 73 erstrecken sich mit ihren Finnenflächen zumindest im Wesentlichen parallel zur Einführrichtung E sowie zumindest im Wesentlichen radial zur Leergut-Einführöffnung 7, wobei sich die Finnen des ersten Satzes und des zweiten Satzes Finnen 71, 73 jeweils in Finnen-Abständen fa zueinander benachbart sowie z.B. auch zumindest im Wesentlichen parallel zueinander angeordnet sind, sodass sich auf dem Steg befindliches Leergut L von der optischen Erfassungsvorrichtung 17 auch durch von den Finnen-Abständen fa definierte Finnen-Zwischenlücken 79 zwischen den Finnen 71, 73 hindurch optisch erfassbar ist. Die Finnen und/oder erste und der zweite Satz Finnen 71, 73 sind in einem seitlichen Abstand (in der Draufsicht gesehen quer zur Durchgangsachse DA) von dem mittigen Steg langgestreckter Gestalt 61 angeordnet. Ferner sind die Finnen 71, 73 jeweils z.B. in die Einführrichtung E langgestreckt ausgebildet.

Bei allen Ausführungsformen kann die Fördertechnik 9 z.B. ein erstes und ein zweites sich in Einführrichtung E langerstrecktes Förderband 91, 93 mit einer korrespondierend langgestreckten Förderbandfläche 95, 97 aufweisen. Die Förderbänder 91, 93 erstrecken sich z.B. bezüglich einer sich in der Einführrichtung E und/oder parallel zur Durchgangsachse DA erstreckenden, zwischen den Förderbändern verlaufenden Längsachse LA, welche in der Draufsicht der Vorrichtung durch die Mitte der Leergut-Einführöffnung 7 verläuft, zumindest im Wesentlichen symmetrisch, und der Steg 19 ist z.B. ebenfalls bezüglich dieser Längsachse zumindest im Wesentlichen symmetrisch ausgebildet ist. D.h., bei der dritten Ausführungsform erstreckt sich z.B. der Steg langgestreckter Gestalt 61 symmetrisch zur genannten Längsachse LA, und der erste und der zweite Satz Finnen 71, 73 sind z.B. bezüglich der genannten Längsachse symmetrisch zueinander, z.B. spiegelsymmetrisch, angeordnet und/oder ausgebildet.

Die Förderbandflächen 95, 97 können z.B. unter Ausbildung eines V-förmigen Querschnitts schräg angeordnet sein, wobei die Spitze des V's in der Draufsicht zumindest im Wesentlichen auf der Durchgangsachse DA der Leergut-Einführöffnung 7 liegt.

## Patentansprüche

1. Leergut-Rücknahme-Vorrichtung (1), aufweisend:
• ein Vorrichtungsgehäuse (3), welches eine Gehäusewand (5) aufweist,
• eine Leergut-Einführöffnung (7), welche in der Gehäusewand (5) ausgebildet ist und über welche Leergut (L) in die Leergut-Rücknahme-Vorrichtung (1) entlang einer Einführrichtung (E) einführbar ist,
• eine Fördertechnik (9), welche im Vorrichtungsgehäuse (3) angeordnet ist und von welcher Leergut (L), das über die Leergut-Einführöffnung (7) eingeführt wurde, weggefördert werden kann, wobei die Fördertechnik (9) einen Leergut-Aufnahmeabschnitt (13) aufweist, welcher der Leergut-Einführöffnung (7) zugewandt ist und über welchen das Leergut (L) von der Leergut-Einführöffnung (7) aus auf die Fördertechnik (9) gelangt, wobei der Leergut-Aufnahmeabschnitt (13) benachbart zu sowie in der Einführrichtung (E) in einem Abstand von der Leergut-Einführöffnung (7) angeordnet ist, sodass zwischen der Leergut-Einführöffnung (7) und dem Leergut-Aufnahmeabschnitt (13) ein durch den Abstand definierter Spalt (15) vorliegt,
• eine optische Erfassungsvorrichtung (17), welche im Vorrichtungsgehäuse (3) benachbart zur sowie zumindest teilweise um die Leergut-Einführöffnung (7) herum angeordnet ist, und eingerichtet ist, über die Leergut-Einführöffnung (7) eingeführtes Leergut (L) zumindest im Wesentlichen rundherum optisch erfassen zu können, und einen Steg (19), welcher sich in der Einführrichtung (E) in einem Bereich zwischen einem unteren Abschnitt (21) der Leergut-Einführöffnung (7) und dem Leergut-Aufnahmeabschnitt(13) der Fördertechnik (9) erstreckt, um dadurch als eine den Spalt (15) in die Einführrichtung (E) zumindest teilweise überbrückende Auflage für das Leergut (L) dienen zu können;
wobei
• der Steg (19) einen ersten Satz und einen zweiten Satz von in Finnen-Abständen (fa) zueinander benachbart angeordneten Finnen (71, 73) mit einer jeweiligen Finnenfläche (75, 77) aufweist, welche Finnen (71, 73) sich mit ihrer Finnenfläche (75, 77) jeweils zumindest im Wesentlichen parallel zur Einführrichtung (E) sowie zumindest im Wesentlichen radial zur Leergut-Einführöffnung (7) erstrecken, sodass sich auf dem Steg (19) befindliches Leergut (L) von der optischen Erfassungsvorrichtung auch durch von den Finnen-Abständen (fa) definierte Finnen-Zwischenlücken (79) zwischen den Finnen (71, 73) hindurch optisch erfassbar ist.

2. Leergut-Rücknahme-Vorrichtung (1) gemäß Anspruch 1, mit einer Manschette (33), die sich entlang eines Innenumfangs der Leergut-Einführöffnung (7) erstreckt, wobei sich der Steg (19) von einem unteren Abschnitt (21) der Manschette (33) aus in die Leergut-Einführrichtung (E) integral erstreckt.

3. Leergut-Rücknahme-Vorrichtung (1) gemäß Anspruch 1 oder 2, wobei der Steg (19) mit der Gehäusewand (5) fest verbunden ist und sich von dem unteren Abschnitt (21) der Leergut-Einführöffnung (7) aus in Richtung zu dem Leergut-Aufnahmeabschnitt (13) hin erstreckt.

4. Leergut-Rücknahme-Vorrichtung (1) gemäß einem der Ansprüche 1 bis 3, wobei der Steg (19) zumindest teilweise eine in Einführrichtung (E) langgestreckte Gestalt hat, mit einer Breite (b), die maximal so groß ist wie die Hälfte oder ein Viertel eines mittleren Durchmessers (D) und/oder eines Umkreisdurchmessers der Leergut-Einführöffnung (7).

5. Leergut-Rücknahme-Vorrichtung (1) gemäß einem der Ansprüche 1 bis 4, wobei der Steg (19) eine Lippe aufweist oder von einer Lippe gebildet ist, die sich entlang der Einführrichtung (E) von der Einführ-Öffnung (7) aus bis zu einem dem Leergut-Aufnahmeabschnitt (13) hin zugewandten, freien Endabschnitt (39) hin verjüngt, welcher quer zu Einführrichtung (E) eine Breite hat, die maximal so groß ist wie die Hälfte oder ein Viertel eines mittleren Durchmessers (D) und/oder eines Umkreisdurchmessers der Leergut-Einführöffnung (7).

6. Leergut-Rücknahme-Vorrichtung (1) gemäß Anspruch 5, wobei sich die Lippe beidseitig degressiv verjüngt, sodass die Lippe in Breitenrichtung sich einander gegenüberliegende konkave Seitenränder (41, 43) aufweist.

7. Leergut-Rücknahme-Vorrichtung (1) gemäß einem der Ansprüche 1 bis 3, wobei der Steg (19) eine Doppel-Lippe mit einer ersten und einer zweiten Lippe (23, 25) aufweist oder davon gebildet ist, welche sich jeweils in die Einführrichtung (E) von der Leergut-Einführöffnung (7) aus bis zu einem freien Endabschnitt (27, 29) hin erstrecken, und wobei sich die erste und die zweite Lippe (23, 25) quer zur Einführrichtung (E) in einem Lippen-Querabstand (q) voneinander angeordnet sind, sodass sich auf dem Steg (19) befindliches Leergut (L) von der optischen Erfassungsvorrichtung (17) auch durch eine von dem Lippen-Querabstand (q) definierte Lippen-Zwischenlücke (31) zwischen der ersten und der zweiten Lippe (23, 25) hindurch optisch erfassbar ist.

8. Leergut-Rücknahme-Vorrichtung (1) gemäß Anspruch 1 insofern rückbezogen auf Anspruch 4, wobei der erste Satz von Finnen (71) und der zweite Satz von Finnen (73) auf einander gegenüberliegenden Seiten des Stegs langgestreckter Gestalt (61) angeordnet sind.

9. Leergut-Rücknahme-Vorrichtung (1), aufweisend:
• ein Vorrichtungsgehäuse (3), welches eine Gehäusewand (5) aufweist,
• eine Leergut-Einführöffnung (7), welche in der Gehäusewand (5) ausgebildet ist und über welche Leergut (L) in die Leergut-Rücknahme-Vorrichtung (1) entlang einer Einführrichtung (E) einführbar ist,
• eine Fördertechnik (9), welche im Vorrichtungsgehäuse (3) angeordnet ist und von welcher Leergut (L), das über die Leergut-Einführöffnung (7) eingeführt wurde, weggefördert werden kann, wobei die Fördertechnik (9) einen Leergut-Aufnahmeabschnitt (13) aufweist, welcher der Leergut-Einführöffnung (7) zugewandt ist und über welchen das Leergut (L) von der Leergut-Einführöffnung (7) aus auf die Fördertechnik (9) gelangt, wobei der Leergut-Aufnahmeabschnitt (13) benachbart zu sowie in der Einführrichtung (E) in einem Abstand von der Leergut-Einführöffnung (7) angeordnet ist, sodass zwischen der Leergut-Einführöffnung (7) und dem Leergut-Aufnahmeabschnitt (13) ein durch den Abstand definierter Spalt (15) vorliegt,
• eine optische Erfassungsvorrichtung (17), welche im Vorrichtungsgehäuse (3) benachbart zur sowie zumindest teilweise um die Leergut-Einführöffnung (7) herum angeordnet ist, und eingerichtet ist, über die Leergut-Einführöffnung (7) eingeführtes Leergut (L) zumindest im Wesentlichen rundherum optisch erfassen zu können, und einen Steg (19), welcher sich in der Einführrichtung (E) in einem Bereich zwischen einem unteren Abschnitt (21) der Leergut-Einführöffnung (7) und dem Leergut-Aufnahmeabschnitt(13) der Fördertechnik (9) erstreckt, um dadurch als eine den Spalt (15) in die Einführrichtung (E) zumindest teilweise überbrückende Auflage für das Leergut (L) dienen zu können;
wobei
• der Steg (19) eine Doppel-Lippe mit einer ersten und einer zweiten Lippe (23, 25) aufweist oder davon gebildet ist, welche sich jeweils in die Einführrichtung (E) von der Leergut-Einführöffnung (7) aus bis zu einem freien Endabschnitt (27, 29) hin erstrecken, und wobei sich die erste und die zweite Lippe (23, 25) quer zur Einführrichtung (E) in einem Lippen-Querabstand (q) voneinander angeordnet sind, sodass sich auf dem Steg (19) befindliches Leergut (L) von der optischen Erfassungsvorrichtung (17) auch durch eine von dem Lippen-Querabstand (q) definierte Lippen-Zwischenlücke (31) zwischen der ersten und der zweiten Lippe (23, 25) hindurch optisch erfassbar ist.

10. Leergut-Rücknahme-Vorrichtung (1) gemäß Anspruch 9, mit einer Manschette (33), die sich entlang eines Innenumfangs der Leergut-Einführöffnung (7) erstreckt, wobei sich der Steg (19) von einem unteren Abschnitt (21) der Manschette (33) aus in die Leergut-Einführrichtung (E) integral erstreckt.

11. Leergut-Rücknahme-Vorrichtung (1) gemäß Anspruch 9 oder 10, wobei der Steg (19) mit der Gehäusewand (5) fest verbunden ist und sich von dem unteren Abschnitt (21) der Leergut-Einführöffnung (7) aus in Richtung zu dem Leergut-Aufnahmeabschnitt (13) hin erstreckt.

12. Leergut-Rücknahme-Vorrichtung (1) gemäß einem der Ansprüche 9 bis 11, wobei der Steg (19) zumindest teilweise eine in Einführrichtung (E) langgestreckte Gestalt hat, mit einer Breite (b), die maximal so groß ist wie die Hälfte oder ein Viertel eines mittleren Durchmessers (D) und/oder eines Umkreisdurchmessers der Leergut-Einführöffnung (7).

13. Leergut-Rücknahme-Vorrichtung (1) gemäß einem der Ansprüche 1 bis 12, wobei der Steg (19) ein transparentes Material aufweist oder aus einem transparenten Material ausgebildet ist, sodass die optische Erfassungsvorrichtung (17) auf dem Steg (19) befindliches Leergut (L) durch den Steg (19) hindurch optisch erfassen kann.

14. Leergut-Rücknahme-Vorrichtung (1) gemäß einem der Ansprüche 1 bis 13, wobei die Fördertechnik (9) ein erstes und ein zweites sich in Einführrichtung langerstrecktes Förderband (91, 93) mit einer korrespondierend langgestreckten Förderbandfläche (95, 97) aufweist, wobei die Förderbänder (91, 93) bezüglich einer sich in der Einführrichtung (E) erstreckenden, zwischen den Förderbändern (91, 93) verlaufenden Längsachse (LA), welche in der Draufsicht der Vorrichtung (1) durch die Mitte der Leergut-Einführöffnung (7) verläuft, zumindest im Wesentlichen symmetrisch angeordnet sind, und wobei der Steg (19) ebenfalls bezüglich dieser Längsachse zumindest im Wesentlichen symmetrisch ausgebildet ist.

## Claims

1. Return device for empties (1), having:
- a device housing (3) which has a housing wall (5) ;
- an empties-introduction opening (7) which is configured in the housing wall (5) and by way of which empties (L) are introducible along an introduction direction (E) into the return device for empties (1);
- a conveying mechanism (9) which is disposed in the device housing (3) and by which empties (L) that have been introduced by way of the empties-introduction opening (7) can be conveyed away, wherein the conveying mechanism (9) has an empties-receptacle portion (13) which faces the empties-introduction opening (7) and by way of which the empties (L) emanating from the empties-introduction opening (7) reach the conveying mechanism (9), wherein the empties-receptacle portion (13) is disposed so as to be adjacent to the empties-introduction opening (7) and spaced apart therefrom in the introduction direction (E) such that a gap (15) that is defined by the spacing is present between the empties-introduction opening (7) and the empties-receptacle portion (13);
- an optical detection device (17) which is disposed in the device housing (3) so as to be adjacent to the empties-introduction opening (7) and so as to be at least partially about the latter, so as to be configured to be able to optically detect in an at least substantially encircling manner empties (L) that are introduced by way of the empties-introduction opening (7); and a web (19) which in the introduction direction (E) extends in a region between a lower portion (21) of the empties-introduction opening (7) and the empties-receptacle portion (13) of the conveying mechanism (9), so as to on account thereof be able to serve as a bearing for the empties (L) that in the introduction direction (E) at least partially bridges the gap (15);
wherein
- the web (19) has a first set and a second set of fins (71, 73) that are disposed so as to be mutually adjacent at fin spacings (fa) and have a respective fin face (75, 77), said fins (71, 73) by way of the fin faces (75, 77) thereof each extending at least substantially parallel with the introduction direction (E) and at least substantially radially to the empties-introduction opening (7) such that empties (L) that are located on the web (19) are optically detectable by the optical detection device also through intermediate fin gaps (79) that are defined by the fin spacings (fa) between the fins (71, 73) .

2. Return device for empties (1) according to Claim 1, having a sleeve (33) which extends along an internal circumference of the empties-introduction opening (7), wherein the web (19) extends in an integral manner from a lower portion (21) of the sleeve (33) in the empties-introduction direction (E).

3. Return device for empties (1) according to Claim 1 or 2, wherein the web (19) is fixedly connected to the housing wall (5) and extends from the lower portion (21) of the empties-introduction opening (7) in the direction toward the empties-receptacle portion (13).

4. Return device for empties (1) according to one of Claims 1 to 3, wherein the web (19) at least in part has a shape that is elongate in the introduction direction (E), having a width (b) which at maximum is the size of half or a quarter of a mean diameter (D) and/or of a circumferential diameter of the empties-introduction opening (7).

5. Return device for empties (1) according to one of Claims 1 to 4, wherein the web (19) has a lip, or is formed by a lip, which from the introduction opening (7) tapers off along the introduction direction (E) up to a free end portion (39) that faces the empties-receptacle portion (13) and transversely to the introduction direction (E) has a width which at maximum is the size of half or a quarter of a mean diameter (D) and/or of a circumferential diameter of the empties-introduction opening (7).

6. Return device for empties (1) according to Claim 5, wherein the lip degressively tapers off on both sides such that the lip in the width direction has mutually opposite concave lateral peripheries (41, 43) .

7. Return device for empties (1) according to one of Claims 1 to 3, wherein the web (19) has a double lip, or is formed by a double lip, having a first and a second lip (23, 25) which each extend from the empties-introduction opening (7) in the introduction direction (E) up to a free end portion (27, 29), and wherein the first and the second lip (23, 25) are disposed transversely to the introduction direction (E) at a mutual transverse lip spacing (q) such that empties (L) that are located on the web (19) are optically detectable by the optical detection device (17) also through an intermediate lip gap (31) that is defined by the transverse lip spacing (q) between the first and the second lip (23, 25).

8. Return device for empties (1) according to Claim 1, to the extent referring back to Claim 4, wherein the first set of fins (71) and the second set of fins (73) are disposed on mutually opposite sides of the web of elongate shape (61).

9. Return device for empties (1), having:
- a device housing (3) which has a housing wall (5) ;
- an empties-introduction opening (7) which is configured in the housing wall (5) and by way of which empties (L) are introducible along an introduction direction (E) into the return device for empties (1);
- a conveying mechanism (9) which is disposed in the device housing (3) and by which empties (L) that have been introduced by way of the empties-introduction opening (7) can be conveyed away, wherein the conveying mechanism (9) has an empties-receptacle portion (13) which faces the empties-introduction opening (7) and by way of which the empties (L) emanating from the empties-introduction opening (7) reach the conveying mechanism (9), wherein the empties-receptacle portion (13) is disposed so as to be adjacent to the empties-introduction opening (7) and spaced apart therefrom in the introduction direction (E) such that a gap (15) that is defined by the spacing is present between the empties-introduction opening (7) and the empties-receptacle portion (13);
- an optical detection device (17) which is disposed in the device housing (3) so as to be adjacent to the empties-introduction opening (7) and so as to be at least partially about the latter, so as to be configured to be able to optically detect in an at least substantially encircling manner empties (L) that are introduced by way of the empties-introduction opening (7); and a web (19) which in the introduction direction (E) extends in a region between a lower portion (21) of the empties-introduction opening (7) and the empties-receptacle portion (13) of the conveying mechanism (9), so as to on account thereof be able to serve as a bearing for the empties (L) that in the introduction direction (E) at least partially bridges the gap (15);
wherein
- the web (19) has a double lip, or is formed by a double lip, having a first and a second lip (23, 25) which each extend from the empties-introduction opening (7) in the introduction direction (E) up to a free end portion (27, 29), and wherein the first and the second lip (23, 25) are disposed transversely to the introduction direction (E) at a mutual transverse lip spacing (q) such that empties (L) that are located on the web (19) are optically detectable by the optical detection device (17) also through an intermediate lip gap (31) that is defined by the transverse lip spacing (q) between the first and the second lip (23, 25).

10. Return device for empties (1) according to Claim 9, having a sleeve (33) which extends along an internal circumference of the empties-introduction opening (7), wherein the web (19) extends in an integral manner from a lower portion (21) of the sleeve (33) in the empties-introduction direction (E).

11. Return device for empties (1) according to Claim 9 or 10, wherein the web (19) is fixedly connected to the housing wall (5) and extends from the lower portion (21) of the empties-introduction opening (7) in the direction toward the empties-receptacle portion (13).

12. Return device for empties (1) according to one of Claims 9 to 11, wherein the web (19) at least in part has a shape that is elongate in the introduction direction (E), having a width (b) which at maximum is the size of half or a quarter of a mean diameter (D) and/or of a circumferential diameter of the empties-introduction opening (7).

13. Return device for empties (1) according to one of Claims 1 to 12, wherein the web (19) has a transparent material, or is formed from a transparent material, such that the optical detection device (17) can optically detect empties (L) that are located on the web (19) through the web (19) .

14. Return device for empties (1) according to one of Claims 1 to 13, wherein the conveying mechanism (9) has a first and a second conveyor belt (91, 93) that are elongate in the introduction direction, having a correspondingly elongate conveyor-belt face (95, 97), wherein the conveyor belts (91, 93) in relation to a longitudinal axis (LA) that extends in the introduction direction (E) and runs between the conveyor belts (91, 93) and that in the plan view of the device (1) runs through the centre of the empties-introduction opening (7) are disposed so as to be at least substantially symmetrical, and wherein the web (19), likewise in relation to this longitudinal axis, is configured so as to be at least substantially symmetrical.

## Revendications

1. Dispositif de récupération d'emballages vides (1), le dispositif comprenant :
• un boîtier de dispositif (3) qui comporte une paroi de boîtier (5),
• une ouverture d'introduction d'emballages vides (7) qui est ménagée dans la paroi de boîtier (5) et par laquelle des emballages vides (L) peuvent être introduits dans le dispositif de récupération d'emballages vides (1) dans une direction d'introduction (E),
• un système de transport (9) qui est disposé dans le boîtier de dispositif (3) et qui peut emporter des emballages vides (L) qui ont été introduits par l'ouverture d'introduction d'emballages vides (7), le système de transport (9) comportant une portion de réception d'emballages vides (13) qui est dirigée vers l'ouverture d'introduction d'emballages vides (7) et qui permet aux emballages vides (L) de parvenir au système de transport (9) depuis l'ouverture d'introduction d'emballages vides (7), la portion de réception d'emballages vides (13) étant disposée de manière adjacente et dans la direction d'introduction (E) à une certaine distance de l'ouverture d'introduction d'emballages vides (7) de manière à ménager un espace (15), défini par ladite distance, entre l'ouverture d'introduction d'emballages vides (7) et la portion de réception d'emballages vides (13),
• un dispositif de détection optique (17) qui est disposé dans le boîtier de dispositif (3) de manière adjacente et au moins partiellement autour de l'ouverture d'introduction d'emballages vides (7), et qui est adapté pour pouvoir détecter optiquement au moins sensiblement tout autour des emballages vides (L) qui ont été introduits par l'ouverture d'introduction d'emballages vides (7), et une nervure (19), qui s'étend dans la direction d'introduction (E) dans une région située entre une portion inférieure (21) de l'ouverture d'introduction d'emballages vides (7) et la portion de réception d'emballages vides (13) du système de transport (9) pour pouvoir ainsi servir de support d'emballage vide (L) qui s'étend au moins partiellement par-dessus l'espace (15) dans la direction d'introduction (E) ;
• la nervure (19) comportant un premier ensemble et un deuxième ensemble d'ailettes (71, 73) pourvues d'une surface d'ailette respective (75, 77) et disposées de manière adjacente les unes aux autres à des distances entre ailettes (fa), lesquelles ailettes (71, 73) s'étendent chacune avec leur surface d'ailette (75, 77) au moins sensiblement parallèlement à la direction d'introduction (E) et au moins sensiblement radialement à l'ouverture d'introduction d'emballages vides (7) de sorte que les emballage vides (L) situés sur la nervure (19) peuvent également être détectés, par le dispositif de détection optique, à travers des intervalles entre ailettes (79) ménagés entre les ailettes (71, 73) et définis par les distances entre ailettes (fa).

2. Dispositif de récupération d'emballages vides (1) selon la revendication 1, le dispositif comprenant un manchon (33) qui s'étend le long d'une circonférence intérieure de l'ouverture d'introduction d'emballages vides (7), la nervure (19) s'étendant intégralement depuis une portion inférieure (21) du manchon (33) dans la direction d'introduction d'emballages vides (E).

3. Dispositif de récupération d'emballages vides (1) selon la revendication 1 ou 2, la nervure (19) étant reliée de manière fixe à la paroi de boîtier (5) et s'étendant depuis la portion inférieure (21) de l'ouverture d'introduction d'emballages vides (7) en direction de la portion de réception d'emballages vides (13) .

4. Dispositif de récupération d'emballages vides (1) selon l'une des revendications 1 à 3, la nervure (19) ayant au moins partiellement une forme qui est allongée dans la direction d'introduction (E) et qui a une largeur (b) égale au plus à la moitié ou au quart d'un diamètre moyen (D) et/ou d'un diamètre de cercle circonscrit de l'ouverture d'introduction d'emballages vides (7).

5. Dispositif de récupération d'emballages vides (1) selon l'une des revendications 1 à 4, la nervure (19) comportant une lèvre ou étant formée par une lèvre qui s'amincit dans la direction d'introduction (E) depuis l'ouverture d'introduction (7) jusqu'à une portion d'extrémité libre (39) dirigée vers la portion de réception d'emballages vides (13) et ayant transversalement à la direction d'introduction (E) une largeur qui est égale au plus à la moitié ou au quart d'un diamètre moyen (D) et/ou d'un diamètre de cercle circonscrit de l'ouverture d'introduction d'emballages vides (7).

6. Dispositif de récupération d'emballages vides (1) selon la revendication 5, la lèvre s'amincissant de manière dégressive des deux côtés de manière à ce que la lèvre comporte des bords latéraux concaves (41, 43) opposés l'un de l'autre dans le sens de la largeur.

7. Dispositif de récupération d'emballages vides (1) selon l'une des revendications 1 à 3, la nervure (19) comportant, ou étant formée par, une double lèvre pourvue d'une première et d'une deuxième lèvre (23, 25) qui s'étendent chacune dans la direction d'introduction (E) depuis l'ouverture d'introduction d'emballages vides (7) jusqu'à une portion d'extrémité libre (27, 29) et la première et la deuxième lèvre (23, 25) étant disposées transversalement à la direction d'introduction (E) à une distance entre lèvres transversale (q) l'une de l'autre de manière à ce que les emballages vides (L) situés sur la nervure (19) peuvent également être détectés optiquement, par le dispositif de détection optique (17), à travers un intervalle entre lèvres intermédiaire (31) défini par la distance entre lèvres transversale (q) entre la première et la deuxième lèvre (23, 25).

8. Dispositif de récupération d'emballages vides (1) selon la revendication 1 dans la mesure où elle se réfère à la revendication 4, le premier ensemble d'ailettes (71) et le deuxième ensemble d'ailettes (73) étant disposés sur des côtés opposés de la nervure de forme allongée (61).

9. Dispositif de récupération d'emballages vides (1), le dispositif comprenant :
• un boîtier de dispositif (3) qui comporte une paroi de boîtier (5),
• une ouverture d'introduction d'emballages vides (7) qui est ménagée dans la paroi de boîtier (5) et par laquelle des emballages vides (L) peuvent être introduits dans le dispositif de récupération d'emballages vides (1) dans une direction d'introduction (E),
• un système de transport (9) qui est disposé dans le boîtier de dispositif (3) et qui permet d'emporter des emballages vides (L) qui ont été introduits par l'ouverture d'introduction d'emballages vides (7), le système de transport (9) comportant une portion de réception d'emballages vides (13) qui est dirigée vers l'ouverture d'introduction d'emballages vides (7) et qui permet aux emballages vides (L) de parvenir au système de transport (9) depuis l'ouverture d'introduction d'emballages vides (7), la portion de réception d'emballages vides (13) étant disposée de manière adjacente et dans la direction d'introduction (E) à une certaine distance de l'ouverture d'introduction d'emballages vides (7) de manière à ménager un espace (15), défini par ladite distance, entre l'ouverture d'introduction d'emballages vides (7) et la portion de réception d'emballages vides (13),
• un dispositif de détection optique (17) qui est disposé dans le boîtier de dispositif (3) de manière adjacente et au moins partiellement autour de l'ouverture d'introduction d'emballages vides (7), et qui est adapté pour pouvoir détecter optiquement au moins sensiblement tout autour des emballages vides (L) qui ont été introduits par l'ouverture d'introduction d'emballages vides (7), et une nervure (19), qui s'étend dans la direction d'introduction (E) dans une région située entre une portion inférieure (21) de l'ouverture d'introduction d'emballages vides (7) et la portion de réception d'emballages vides (13) du système de transport (9) pour pouvoir ainsi servir de support d'emballage vide (L) qui s'étend au moins partiellement par-dessus l'espace (15) dans la direction d'introduction (E) ;
• la nervure (19) comportant, ou étant formée par, une double lèvre pourvue d'une première et d'une deuxième lèvre (23, 25) qui s'étendent chacune dans la direction d'introduction (E) depuis l'ouverture d'introduction d'emballages vides (7) jusqu'à une portion d'extrémité libre (27, 29) et la première et la deuxième lèvre (23, 25) étant disposées transversalement à la direction d'introduction (E) à une distance entre lèvres transversale (q) l'une de l'autre de manière à ce que les emballages vides (L) situés sur la nervure (19) peuvent également être détectés optiquement, par le dispositif de détection optique (17), à travers un intervalle entre lèvres intermédiaire (31) défini par la distance entre lèvres transversale (q) entre la première et la deuxième lèvre (23, 25) .

10. Dispositif de récupération d'emballages vides (1) selon la revendication 9, le dispositif comprenant un manchon (33) qui s'étend le long d'une circonférence intérieure de l'ouverture d'introduction d'emballages vides (7), la nervure (19) s'étendant intégralement depuis une portion inférieure (21) du manchon (33) dans la direction d'introduction d'emballages vides (E).

11. Dispositif de récupération d'emballages vides (1) selon la revendication 9 ou 10, la nervure (19) étant reliée de manière fixe à la paroi de boîtier (5) et s'étendant depuis la portion inférieure (21) de l'ouverture d'introduction d'emballages vides (7) en direction de la portion de réception d'emballages vides (13) .

12. Dispositif de récupération d'emballages vides (1) selon l'une des revendications 9 à 11, la nervure (19) ayant au moins partiellement une forme qui est allongée dans la direction d'introduction (E) et qui a une largeur (b) égale au plus à la moitié ou au quart d'un diamètre moyen (D) et/ou d'un diamètre de cercle circonscrit de l'ouverture d'introduction d'emballages vides (7).

13. Dispositif de récupération d'emballages vides (1) selon l'une des revendications 1 à 12, la nervure (19) comportant un matériau transparent ou étant formée à partir d'un matériau transparent de manière à ce que le dispositif de détection optique (17) puisse détecter optiquement à travers la nervure (19) des emballages vides (L) situés sur la nervure (19).

14. Dispositif de récupération d'emballages vides (1) selon l'une des revendications 1 à 13, le système de transport (9) comportant une première et une deuxième bande transporteuse (91, 93) qui sont allongées dans la direction d'introduction et qui comportent une surface de bande transporteuse (95, 97) allongée de manière correspondante, les bandes transporteuses (91, 93) étant disposées au moins sensiblement symétriquement par rapport à un axe longitudinal (LA) qui s'étend dans la direction d'introduction (E) et entre les bandes transporteuses (91, 93) et qui passe, en vue de dessus du dispositif (1), par le centre de l'ouverture d'introduction d'emballages vides (7), et la nervure (19) étant au moins sensiblement symétrique également par rapport à cet axe longitudinal.
